# EUROPÄISCHE PATENTSCHRIFT

(11) **EP 3 352 326 B1**
(45) Veröffentlichungstag und Bekanntmachung des Hinweises auf die Patenterteilung: **27.04.2022**
(21) Anmeldenummer: 18152474.5
(22) Anmeldetag: 19.01.2018
(51) Int. Cl.: H02J 13/00, G06Q 50/06, H02J 3/38

(54) **SYSTEM ZUR GENERIERUNG VON ECHTZEIT-INFORMATION UND PROGNOSE VON LEISTUNGSREGELUNGEN AUFGRUND VON NETZENGPÄSSEN IN EINEM STROMNETZ**
SYSTEM FOR GENERATING REAL-TIME INFORMATION AND FORECASTING POWER RULES DUE TO NETWORK BOTTLENECKS IN A POWER SUPPLY NETWORK
SYSTÈME DE GÉNÉRATION D'INFORMATIONS EN TEMPS RÉEL ET DE PRÉVISION DE RÉGLAGE DE LA PUISSANCE EN FONCTION DE LA CONGESTION DU RÉSEAU DANS UN RÉSEAU ÉLECTRIQUE

(30) Priorität: 24.01.2017 DE 102017101265; 24.01.2017 DE 202017100343 U
(43) Veröffentlichungstag der Anmeldung: 25.07.2018
(73) Patentinhaber: Ubimet GmbH, 76131 Karlsruhe (DE)
(72) Erfinder: SCHERMEYER, Hans, 76185 Karlsruhe (DE)
(74) Vertreter: DTS Patent- und Rechtsanwälte Schnekenbühl und Partner mbB

(56) Entgegenhaltungen:
- WO-A1-2014/066087
- DE-A1-102010 006 142
- US-A1- 2010 076 613
- Entsoe: "QUALITY OF CGMES DATASETS AND CALCULATIONS FOR SYSTEM OPERATIONS", , 12 October 2016 (2016-10-12), XP055617645, Retrieved from the Internet: URL:https://docstore.entsoe.eu/Documents/N etwork%20codes%20documents/Implementation/ cacm/cgmm/Quality_of_CGMES_Datasets_and_Ca lculations.pdf [retrieved on 2019-09-03]

## Beschreibung

Die vorliegende Erfindung betrifft ein System zum Bereitstellen von Echtzeit-Information und Prognose einer Leistungsregelung aufgrund von Netzengpässen wenigstens eines Stromnetzes.

Die Leistungsregelung eines Stromnetzes, das beispielsweise ein Verteilnetz oder Übertragungsnetz sein kann, gewinnt zunehmend an Bedeutung, da der kontinuierliche Ausbau Erneuerbarer Energien insbesondere in Deutschland in zunehmendem Maße zu Netzengpässen vor allem auf dezentraler Ebene führt.

Um diese Netzengpässe zu vermeiden, wird die fluktuierende Strombeaufschlagung des Stromnetzes aufgrund der volatilen Stromerzeugung der Erneuerbaren Stromerzeugungsanlagen durch das sogenannte Einspeisemanagement geregelt bzw. gesteuert.

Dabei werden je nach Netzbelastung gezielt und temporär diejenigen erneuerbaren Stromerzeugungsanlagen abgeschaltet bzw. deren Einspeiseleistung gesenkt, die den höchsten Einfluss auf den jeweiligen Netzengpass haben.

Die infolge des Einspeisemanagements hervorgerufenen Änderungen der Einspeiseleistungen in ein Stromnetz haben unmittelbare oder mittelbare Folgen auf den Strompreis, welcher beispielsweise am deutschen und europäischen Strommarkt gehandelt wird.

Die Handelsteilnehmer, beispielsweise direktvermarktende Handelsteilnehmer, an diesen Strommärkten haben daher ein berechtigtes Interesse daran, über die zeitaktuelle oder die zeitlich zukünftige Entwicklung der Einspeiseleistung insbesondere erneuerbarer Stromerzeugungsanlagen in das Stromnetz informiert zu sein. Zu den Handelsteilnehmern können ferner auch Stromhändler ohne Direktvermarktung, Übertragungsnetzbetreiber oder Verteilnetzbetreiber gehören.

Aus dem Stand der Technik sind bereits Systeme bekannt, mittels derer beispielsweise die Einspeiseleistung von erneuerbaren Stromerzeugungsanlagen in ein Stromnetz steuerbar bzw. regelbar ist.

So zeigt beispielsweise die DE 10 2012 215 565 A1 eine Vorrichtung und ein Verfahren zur Steuerung eines Anlagenpools von Stromerzeugern, die eine fluktuierende, prognostizierbare Einspeiseleistung aufweisen, insbesondere von regenerativen Stromerzeugern, zur Bereitstellung einer negativen Regelleistung, insbesondere einer negativen Minutenreserve oder Sekundärreserve.

Ferner zeigt die DE 10 2010 006 142 A1 ein Energieportal zur Steuerung bzw. Regelung einer Energieeinspeisung aus einem Erzeugernetz in ein Energieverteilungsnetz unter der Berücksichtigung von Einspeisefaktoren, Erzeugernetzmessgrößen und Prognoseinformationen zur Steuerung bzw. Regelung von Betriebsparametern des Erzeugernetzes.

Ferner zeigt die US 2010/0076613 A1 ein System und ein Verfahren zum Einspeisemanagement in einem Stromnetz.

Wünschenswert wäre jedoch insbesondere die Bündelung und Aufbereitung aller öffentlich zugänglichen Echtzeit-Daten des Einspeisemanagements der jeweiligen Netz- und/oder Stromerzeugungsanlagenbetreiber sowie deren Bereitstellung als Echtzeit-Informationen.

Es ist daher die Aufgabe der vorliegenden Erfindung, ein System der eingangs genannten Art in vorteilhafter Weise zu entwickeln, insbesondere dahingehend, dass das System eine verbesserte und aussagekräftigere Bereitstellung von Echtzeit-Informationen bezüglich einer Leistungsregelung eines Stromnetzes liefert.

Diese Aufgabe wird erfindungsgemäß gelöst durch ein System mit den Merkmalen des unabhängigen Anspruchs 1. Danach ist ein System zum Bereitstellen von Echtzeit-Informationen bezüglich einer Leistungsregelung wenigstens eines Stromnetzes vorgesehen, wobei das Stromnetz wenigstens ein Übertragungsnetz und/oder wenigstens ein Verteilnetz aufweist und wobei das Stromnetz mit mehreren, insbesondere regenerativen oder erneuerbaren, Stromerzeugungsanlagen wirkverbunden ist, wobei das System wenigstens eine Empfangseinrichtung zum Empfangen von Echtzeit-Daten von wenigstens einer elektronischen Datenbank aufweist, die über ein Netzwerk mit der Empfangseinrichtung verbunden ist, wobei die Echtzeit-Daten einer Abschaltung und/oder Herabregelung der Stromerzeugungsanlagen in Folge eines Einspeisemanagements des Stromnetzes zugeordnet sind, wobei das System ferner eine Verarbeitungs- und/oder Recheneinrichtung zum Verarbeiten dieser Echtzeit-Daten aufweist, sodass diese als Echtzeit-Informationen verknüpfbar und/oder bereitstellbar sind.

Die Erfindung basiert auf dem Grundgedanken, Daten des Einspeisemanagements eines Stromnetzes in Folge eines Netzengpasses, beispielsweise eines Verteilnetzes, in Form von Informationen zu verknüpfen und/oder bereitzustellen. Dazu empfängt die Empfangseinrichtung über das Netzwerk die auf der elektronischen Datenbank bereitgestellten Daten und sendet diese weiter an die Verarbeitungs- und/oder Recheneinrichtung, welche die Daten weiterverarbeitet. Die Daten sind zeitaktuelle Daten bezüglich der Abschaltung und/oder Herabregelung von konkreten, insbesondere regenerativen oder erneuerbaren, Stromerzeugungsanlagen durch das Einspeisemanagement des Stromnetzes in Folge von Netzengpässen. Die Daten können so mittels der Verarbeitungs- und/oder Recheneinrichtung als Informationen für, insbesondere direktvermarktende, Handelsteilnehmer eines Strommarktes bereitgestellt werden. Für die Handelsteilnehmer eines Strommarkes sind diese Informationen von großer Bedeutung, da ihr Handeln am Strommarkt maßgeblich von der zeitlichen Strompreisentwicklung abhängt, die wiederum u.a. vom Einspeisemanagement des Stromnetzes beeinflusst wird. Mit Hilfe der bereitgestellten Informationen wird dem Handelsteilnehmer ein wirksames Werkzeug in die Hand gegeben, mittels welchem dieser in der Lage ist, sein Handeln am Strommarkt zu optimieren und so seine Marktposition zu stärken. Dem Handelsteilnehmer können zudem die Informationen in einer großen Vielfalt und nach seinen Wünschen maßgeschneidert, z.B. als Zeitreihe, bereitgestellt werden, wodurch sich das Handeln des Handelsteilnehmers am Strommarkt weiterhin optimieren lässt.

Die Informationen sind Echtzeit-Informationen und die Daten sind Echtzeit-Daten So können beispielsweise die anlagengenauen Veröffentlichungen über das Netzengpassmanagement der Netzbetreiber mit einem Marktstammdatenregister sowie der momentanen, anlagengenauen Erzeugung von Wind, Solar und Biomasse kombiniert werden. Daraus ergibt sich für jede EE-Anlage die aktuell hervorgerufene Leistungsreduktion, welche anschließend über einen Zuordnungsalgorithmus zu beliebigen Regionen wie Regelzonen, Netzknoten oder Bilanzkreisen aggregiert werden kann.

Alternativ und/oder zusätzlich ist denkbar, dass die Informationen Prognose-Informationen sind und die Daten Prognose-Daten sind. Bei der Prognose hingegen ist das System nicht auf die Einsatz-Meldungen der Netzbetreiber oder sonstige elektronische Datenbanken der Netzbetreiber angewiesen. Das Fundamentalmodell der Prognose beinhaltet vorzugsweise ein Lastflussmodell, welches die Netzbelastung in der Zukunft berechnet (dazu wird ein Netzmodell, ein Lastmodell und ein anlagengenaues Stromerzeugungsmodell benötigt). In einem weiteren Schritt wird beispielsweise die Abschaltlogik des Netzbetreibers mit einem Engpassmanagement Algorithmus abgebildet.

Darüber hinaus kann vorgesehen sein, dass die Empfangseinrichtung über das Netzwerk mit mehreren, insbesondere dezentralen und öffentlich zugänglichen, elektronischen Datenbanken jeweiliger Betreiber des Stromnetzes und/oder der Stromerzeugungsanlagen verbunden ist. Die jeweiligen Betreiber des Stromnetzes und/oder der Stromerzeugungsanlagen veröffentlichen über entsprechende elektronische Datenbanken Echtzeit-Daten zum Einspeisemanagement des betroffenen Netzengpasses. Da das System über das Netzwerk, z.B. das Internet, mit diesen elektronischen Datenbanken verbunden ist, kann es die öffentlich verfügbaren Echtzeit-Daten verschiedenster Netzbereiche besonders einfach und vorteilhaft miteinander zu Echtzeit-Informationen verknüpfen. Dadurch ergibt sich eine möglichst große Basis an Echtzeit-Informationen, welche dem Handelsteilnehmer ein noch exakteres und umfangreicheres Bild über das Einspeisemanagement und daraus resultierenden Änderungen des Strompreises geben.

Weiter sind verschiedene Datenformate der Echtzeit-Daten von den jeweiligen elektronischen Datenbanken mittels der Verarbeitungs- und/oder Recheneinrichtung in ein einheitliches Datenformat umwandelbar

Die Güte der Echtzeit-Daten der verschiedenen elektronischen Datenbanken wird durch Algorithmen, welche Plausibilitätschecks durchführen, erhöht. Die Datenformate der durch die jeweiligen Betreiber bereitgestellten Echtzeit-Daten variieren sehr stark und sollten daher vorteilhafterweise im Sinne einer effizienten Verknüpfung und Bereitstellung zunächst durch die Verarbeitungs- und/oder Recheneinrichtung vereinheitlicht werden. Zudem verbessert sich durch das einheitliche Datenformat auch die Handhabung und die Aufbereitung der bereitgestellten Echtzeit-Informationen für den Handelsteilnehmer.

Zudem sind die Echtzeit-Daten einer zeitaktuellen Abschaltung und/oder Herabregelung der Stromerzeugungsanlagen in Folge des Einspeisemanagements des Stromnetzes zugeordnet. Je genauer die Abschaltung und/oder Herabregelung der Stromerzeugungsanlagen in Folge des Einspeisemanagements durch die Echtzeit-Daten abgebildet werden kann, desto besser und schneller kann der Handelsteilnehmer sein Handeln am Strommarkt beeinflussen. Daher ist es besonders vorteilhaft, die aus den Echtzeit-Daten verknüpften und bereitgestellten Echtzeit-Informationen so aktuell wie möglich bereitzustellen.

Außerdem ist möglich, dass mittels der Verarbeitungs- und/oder Recheneinrichtung die Echtzeit-Daten spezifischer Stromerzeugungsanlagen sowie deren spezifische zeitaktuelle Stromerzeugung mit weiteren Daten aus einem Marktstammdatenregister verknüpfbar sind. Diese Verknüpfung bietet insbesondere den Vorteil, dass für jede Stromerzeugungsanlage sehr einfach und eindeutig die durch das Einspeisemanagement auferlegte Leistungsbeschränkung bestimmt werden kann, und sich so noch detailliertere und verbesserte Echtzeit-Informationen bereitstellen lassen.

Des Weiteren kann in diesem Zusammenhang vorgesehen sein, dass mittels der Verarbeitungs- und/oder Recheneinrichtung die Echtzeit-Daten für jede beliebige Stromerzeugungsanlage in Folge des Einspeisemanagements bereitstellbar sind und mittels eines in der Verarbeitungs- und/oder Recheneinrichtung implementierten Zuordnungsalgorithmus für Regionen, wie Regelzonen, Netzknoten bzw. Bilanzkreise oder für ein individuell vorgegebenes Portfolio an potentiell betroffenen Stromerzeugungsanlagen miteinander verknüpfbar sind. Besonders vorteilhaft ist die individuelle und je nach Wunsch des Handelsteilnehmers implementierbare Verknüpfung der Echtzeit-Daten zu den entsprechenden Echtzeit-Informationen. Dadurch ist es möglich, möglichst effiziente und zielgerichtete Echtzeit-Informationen für die Handelsteilnehmer bereitzustellen.

Darüber hinaus sind die Echtzeit-Daten einer oder mehrerer spezifischer Stromerzeugungsanlagen mit Erzeugungszeitreihen dieser zugehörigen einen oder den mehreren Stromerzeugungsanlagen auf Basis von verschiedenen numerischen Wetterprognose-Modellen mittels der Verarbeitungs- und/oder Recheneinrichtung verknüpfbar.

Des Weiteren werden Prognose-Daten einer zeitlich zukünftigen Abschaltung und/oder Herabregelung der Stromerzeugungsanlagen in Folge des Einspeisemanagements des Stromnetzes bereitgestellt. Die Bereitstellung von Prognose-Daten bietet dem Handelsteilnehmer neben den Echtzeit-Informationen ein weiteres Werkzeug, um sein Handeln am Strommarkt noch weiter zu optimieren. Die Prognose-Daten sind zeitaktuelle und abrufbare Daten bezüglich der zukünftigen Abschaltung und/oder Herabregelung von konkreten, insbesondere regenerativen oder erneuerbaren, Stromerzeugungsanlagen durch das Einspeisemanagement des Stromnetzes in Folge von Netzengpässen. Die Prognosehorizonte der Prognoseinformationen können sich dabei individuell auf die Handlungsstrategie des Handelsteilnehmers anpassen lassen, um so besonders vorteilhaft dessen Handeln am Strommarkt unterstützen. Die Prognosehorizonte der Prognoseinformationen können sich dabei von wenigen Stunden bis zu mehreren Tagen erstrecken.

Zudem ist die Verarbeitungs- und/oder Recheneinrichtung zum Verarbeiten von modellbasierten Daten eingerichtet, sodass diese als Prognose-Informationen verknüpfbar und/oder bereitstellbar sind, und wobei die Prognose-Informationen einer zeitlich zukünftigen Abschaltung und/oder Herabregelung der Stromerzeugungsanlagen in Folge des Einspeisemanagements des Stromnetzes zugeordnet sind. Die Prognose-Daten werden im Allgemeinen durch die jeweiligen Betreiber eines Stromnetzes dezentral bereitgestellt und können daher hinsichtlich der Verfügbarkeit und der Prognosegüte Schwankungen unterworfen sein. Daher ergeben sich durch eine zentrale Bereitstellung der Prognose-Informationen für den Handelsteilnehmer weitere Vorteile hinsichtlich der Prognosegüte sowie der regionalen Verfügbarkeit der Prognose-Informationen.

Zusätzlich sind die Prognose-Informationen mittels der Verarbeitungs- und/oder Recheneinrichtung sowie mittels eines darin implementierten Lastflussmodells des Stromnetzes zur Berechnung dessen zeitlich zukünftiger Strombeaufschlagung bestimmbar, wobei ein Stromnetzmodell, ein Lastmodell sowie ein Stromerzeugungsmodell als Eingabeparameter für das Lastflussmodell vorgesehen sind. Für das Bereitstellen von Prognose-Informationen ist besonders wichtig und vorteilhaft, das Wissen darüber generieren zu können, wo und wann welche Last im Stromnetz anfällt und welche Beaufschlagung des Stromnetzes diese Belastung zur Folge hat. Da insbesondere die Eingabeparameter maßgeblich für die Verbesserung der Modellgüte verantwortlich sind, ist eine möglichst genaue Kenntnis dieser Parameter besonders wichtig, um die Modellgüte für das Bereitstellen der Prognose-Informationen zu verbessern.

Ferner ist vorgesehen, dass Stromverbrauchszeitreihen auf der Grundlage des Lastmodells für Industrie-, Gewerbe- und Haushaltslast mittels der Verarbeitungs- und/oder Recheneinrichtung bestimmbar sind, und Stromerzeugungszeitreihen auf der Grundlage des Stromerzeugungsmodells in Form von Stromerzeugungsvorhersagen für die Stromerzeugungsanlagen basierend auf verschiedenen numerischen Wetterprognosen sowie für weitere grundlastfähige Stromerzeugungsanlagen mittels der Verarbeitungs- und/oder Recheneinrichtung bestimmbar sind. Sowohl das Lastmodell als auch Stromerzeugungsmodell bieten besonders für die realitätsnahe Umsetzung bzw. Berechnung einen sehr guten Kompromiss aus Modellkomplexität und zu erwartender Modellgüte. Im Übrigen können diese Modelle leicht durch zukünftige Implementierungen und Validierungen auf der Grundlage von Echtzeit-Informationen verbessert werden.

Auch vorgesehen ist, dass die Prognose-Informationen mittels des in der Verarbeitungs- und/oder Recheneinrichtung implementierten Lastflussmodells auf der Grundlage derjenigen einen oder mehreren Stromerzeugungsanlagen bestimmbar sind, die einen maximalen knotenscharfen Einfluss auf einen Engpass des Stromnetzes aufweisen. Durch das Bestimmen des maximalen knotenscharfen Einflusses der jeweiligen Stromerzeugungsanlage wird es besonders effizient und einfach möglich, diejenige Stromerzeugungsanlage oder diejenigen Stromerzeugungsanlagen zu identifizieren, welche durch das zukünftige Einspeisemanagement abgeschaltet bzw. herabgeregelt werden.

Die Auswahl derjenigen Stromerzeugungsanlagen, welche einen maximalen knotenscharfen Einfluss auf einen Engpass des Stromnetzes aufweisen, wird vorzugsweise mit einem Engpassmanagement-Algorithmus getroffen.

Überdies ist möglich, dass mittels der Verarbeitungs- und/oder Recheneinrichtung die Prognose-Informationen für jede beliebige Stromerzeugungsanlage und beliebige Vorhersagehorizonte in Folge des Einspeisemanagements bereitstellbar sind und mittels eines in der Verarbeitungs- und/oder Recheneinrichtung implementierten Zuordnungsalgorithmus für Regionen, wie Regelzonen, Netzknoten bzw. Bilanzkreise oder für ein individuell vorgegebenes Portfolio an potentiell betroffenen Stromerzeugungsanlagen miteinander verknüpfbar sind. Besonders vorteilhaft ist die individuelle und je nach Wunsch des Handelsteilnehmers implementierbare Verknüpfung der Prognosedaten zu den entsprechenden Prognoseinformationen. Somit können möglichst effizient und zielgerichtet Prognoseinformationen für den/die Handelsteilnehmer bereitgestellt werden. Die Vorhersagehorizonte können beliebige Zeiträume abdecken. Dabei kann es sich um Bereiche von beispielsweise Minuten, Stunden oder auch wenigen Tagen handeln.

Weitere Einzelheiten und Vorteile der Erfindung sollen nun anhand eines in den Figuren gezeigten Ausführungsbeispiels näher erläutert werden.

Es zeigen:
- Fig. 1: eine schematische Darstellung eines Ausführungsbeispiels eines erfindungsgemäßen Systems zum Bereitstellen von Echtzeit-Informationen;
- Fig. 2: eine schematische Darstellung eines in der Verarbeitungs- oder Recheneinrichtung implementierten Lastflussmodells des Stromnetzes;
- Fig. 3: eine schematische Darstellung zweier mittels der Verarbeitungs- oder Recheneinrichtung und des Lastflussmodells bestimmten Engpässe des Stromnetzes; und
- Fig. 4: eine schematische Darstellung von Stromerzeugungsanlagen, die einen maximalen knotenscharfen Einfluss auf die beiden in Fig. 3 dargestellten Netzengpässe haben.

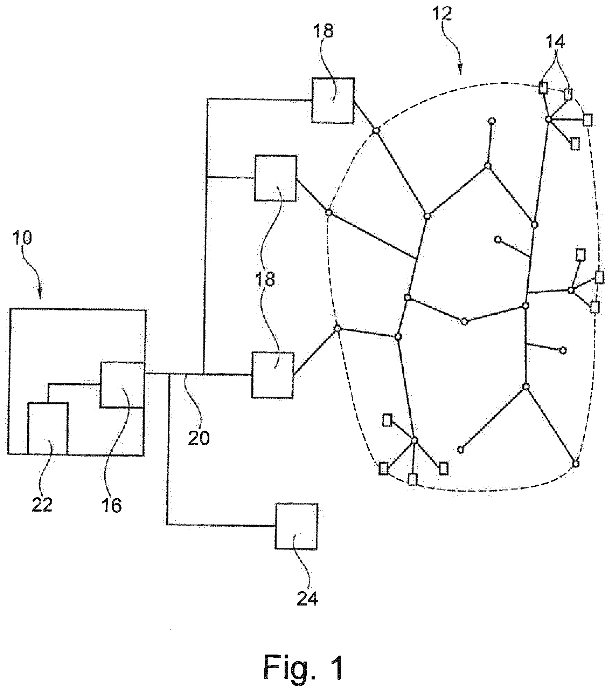

**Fig. 1** zeigt eine schematische Darstellung eines Ausführungsbeispiels eines erfindungsgemäßen Systems 10 zum Bereitstellen von Echtzeit-Informationen bezüglich einer Leistungsregelung eines Stromnetzes 12.

Das Stromnetz 12 weist ein Übertragungsnetz 12 oder ein Verteilnetz 12 auf.

Ferner ist das Stromnetz 12 mit mehreren regenerativen oder erneuerbaren Stromerzeugungsanlagen 14 wirkverbunden.

Das System 10 weist eine Empfangseinrichtung 16 auf.

Ferner sind hier drei elektronische Datenbanken 18 vorgesehen, die über ein Netzwerk 20 mit der Empfangseinrichtung 16 verbunden sind.

Denkbar ist aber auch, dass pro Stromnetz 12 eine einzige Datenbank 18, zwei oder auch mehrere Datenbanken 18 vorgesehen ist.

Zudem weist das System 10 eine Verarbeitungs- oder Recheneinrichtung 22 auf, die mit der Empfangseinrichtung 16 verbunden ist.

Ferner weist das System 10 ein elektronisches Marktstammregister 24 auf, das ebenfalls über das Netzwerk 20 mit der Empfangseinrichtung 16 verbunden ist.

Die Funktion des Systems 10 lässt sich folgendermaßen beschreiben:
Das System 10 weist eine Empfangseinrichtung 16 zum Empfangen von Echtzeit-Daten von mehreren elektronischen Datenbanken 18 auf.

Die Echtzeit-Daten sind einer Abschaltung oder Herabregelung der Stromerzeugungsanlagen 14 in Folge eines Einspeisemanagements des Stromnetzes 12 zugeordnet.

Die elektronischen Datenbanken 18 sind über jeweilige nicht näher in Fig. 1 dargestellte Datenschnittstellen an verschiedenen Punkten mit dem Stromnetz 12 verbunden.

Mittels der Datenschnittstellen können die Echtzeit-Daten des Stromnetzes 12 an die elektronischen Datenbanken 18 übertragen werden.

Die elektronischen Datenbanken 18 sind dezentral und öffentlich zugänglich und sind dem jeweiligen Betreiber des Stromnetzes 12 oder der Stromerzeugungsanlagen 14 zugeordnet.

Wie vorstehend erläutert, weist das System 10 ferner die Verarbeitungs- oder Recheneinrichtung 22 zum Verarbeiten dieser Echtzeit-Daten auf, so dass diese als Echtzeit-Informationen verknüpfbar oder bereitstellbar sind.

Die Echtzeit-Daten sind nach dem Verarbeiten durch die Verarbeitungs- oder Recheneinrichtung 22 als Echtzeit-Informationen direktvermarktenden Handelsteilnehmern eines Strommarkts oder Stromnetzbetreibern bereitstellbar.

Da die Bereitstellung der Echtzeit-Daten mittels der elektronischen Datenbanken 18 dezentral durch die jeweiligen Netzbetreiber erfolgt, variieren das Datenformat, die Datengüte und die Frequenz der Bereitstellung.

Dabei sind die verschiedenen Datenformate der Echtzeit-Daten von den jeweiligen elektronischen Datenbanken 18 mittels der Verarbeitungs- oder Recheneinrichtung 22 in ein einheitliches Datenformat umwandelbar und fehlerhafte Daten mittels Plausibiliätschecks zu entfernen.

Die Echtzeit-Daten sind dabei einer zeitaktuellen Abschaltung oder Herabregelung der Stromerzeugungsanlagen 14 in Folge des Einspeisemanagements des Stromnetzes 12 zugeordnet.

Ferner sind mittels der Verarbeitungs- oder Recheneinrichtung 22 die Echtzeit-Daten spezifischer Stromerzeugungsanlagen 14 sowie deren spezifische zeitaktuelle Stromerzeugung mit weiteren Daten aus einem Marktstammdatenregister 24 verknüpfbar.

Diesbezüglich kann mittels der Verarbeitungs- oder Recheneinrichtung 22 eine Hochrechnung der verfügbaren Echtzeit-Informationen auf unterschiedliche Bilanzierungsebenen (z.B. regional, überregional oder national) des Stromnetzes erfolgen.

Beispielsweise ist es so möglich, diese Echtzeit-Informationen über das Einspeisemanagement für Deutschland zu generieren.

Dies kann anhand einer graphischen Darstellung dieser Echtzeit-Informationen in Form einer Karte des Stromnetzes 12 bzw. des Verteilnetzes oder Verbundnetzes sein, in welcher die engpassbehafteten Bereiche des Stromnetzes visualisiert werden.

Weitere graphische Darstellungen, z.B. eine Zeitreihe in Form von zwei- oder dreidimensionalen Schaubildern der Abschaltung oder Herabregelung der Stromerzeugungsanlagen sind ebenfalls denkbar.

Zudem sind mittels der Verarbeitungs- oder Recheneinrichtung 22 die Echtzeit-Informationen für jede beliebige Stromerzeugungsanlage 14 in Folge des Einspeisemanagements bereitstellbar.

Dies erlaubt eine Bereitstellung der Echtzeit-Informationen bezüglich des Einspeisemanagements auf geographisch detaillierterer Ebene, z.B. für Umspannwerke oder einzelne Stromerzeugungsanlagen.

Zusätzlich sind die Echtzeit-Daten mittels eines in der Verarbeitungs- oder Recheneinrichtung 22 implementierten Zuordnungsalgorithmus für Regionen, wie Regelzonen, Netzknoten bzw. Bilanzkreise oder für ein individuell vorgegebenes Portfolio an potentiell betroffenen Stromerzeugungsanlagen 14 miteinander verknüpfbar.

Die Echtzeit-Daten einer oder mehrerer spezifischer Stromerzeugungsanlagen 14 sind zudem mit Erzeugungszeitreihen dieser zugehörigen einen oder den mehreren Stromerzeugungsanlagen 14 auf Basis von verschiedenen numerischen Wetterprognose-Modellen mittels der Verarbeitungs- oder Recheneinrichtung 22 verknüpfbar.

Die Verarbeitungs- oder Recheneinrichtung 22 stellt so eine Validierungsbasis bereit, mit deren Hilfe modellbasierte Erzeugungszeitreihen bzw. Zeitreihen für die Herabregelung einer oder mehrerer Stromerzeugungsanlagen 14 optimiert werden können.

Neben der Bereitstellung der Echtzeit-Informationen, welche der zeitaktuellen Abschaltung oder Herabregelung von erneuerbaren oder regenerativen Stromerzeugungsanlagen zugeordnet sind, werden durch das System auch Prognose-Daten für zukünftige Abschaltungen oder Herabregelungen bereitgestellt.

Die durch das System 10 bereitgestellten Informationen sind also Echtzeit-Informationen und die Daten sind Echtzeit-Daten So können beispielsweise die anlagengenauen Veröffentlichungen über das Netzengpassmanagement der Netzbetreiber mit einem Marktstammdatenregister sowie der momentanen, anlagengenauen Erzeugung von Wind, Solar und Biomasse kombiniert werden. Daraus ergibt sich für jede EE-Anlage die aktuell hervorgerufene Leistungsreduktion, welche anschließend über einen Zuordnungsalgorithmus zu beliebigen Regionen wie Regelzonen, Netzknoten oder Bilanzkreisen aggregiert werden kann.

Alternativ und/oder zusätzlich ist denkbar, dass die durch das System 10 bereitgestellten Informationen Prognose-Informationen sind und die Daten Prognose-Daten sind. Bei der Prognose hingegen ist das System 10 nicht auf die Einsatz-Meldungen der Netzbetreiber oder sonstige elektronische Datenbanken der Netzbetreiber angewiesen. Das Fundamentalmodell der Prognose beinhaltet vorzugsweise ein Lastflussmodell, welches die Netzbelastung in der Zukunft berechnet (dazu wird ein Netzmodell, ein Lastmodell und ein anlagengenaues Stromerzeugungsmodell benötigt). In einem weiteren Schritt wird beispielsweise die Abschaltlogik des Netzbetreibers mit einem Engpassmanagement Algorithmus abgebildet.

Die Daten sind dabei in Form von Prognosedaten einer zeitlich zukünftigen Abschaltung oder Herabregelung der Stromerzeugungsanlagen 14 in Folge des Einspeisemanagements des Stromnetzes 12 zugeordnet.

Diese Informationen in Form von Prognosen sind ebenfalls einer zeitlich zukünftigen Abschaltung oder Herabregelung der Stromerzeugungsanlagen 14 in Folge des Einspeisemanagements des Stromnetzes 12 zugeordnet.

Die Grundlage für eine möglichst genaue Bereitstellung von modellbasierten Prognoseinformationen ist das Verständnis dafür, wo und wann welche zukünftige Strombeaufschlagung bzw. -belastung des Stromnetzes auftreten wird.

Hierzu sind die Prognoseinformationen mittels der Verarbeitungs- oder Recheneinrichtung 22 sowie mittels eines darin implementierten Lastflussmodells des Stromnetzes 12 zur Berechnung dessen zeitlich zukünftiger Strombeaufschlagung bestimmbar.

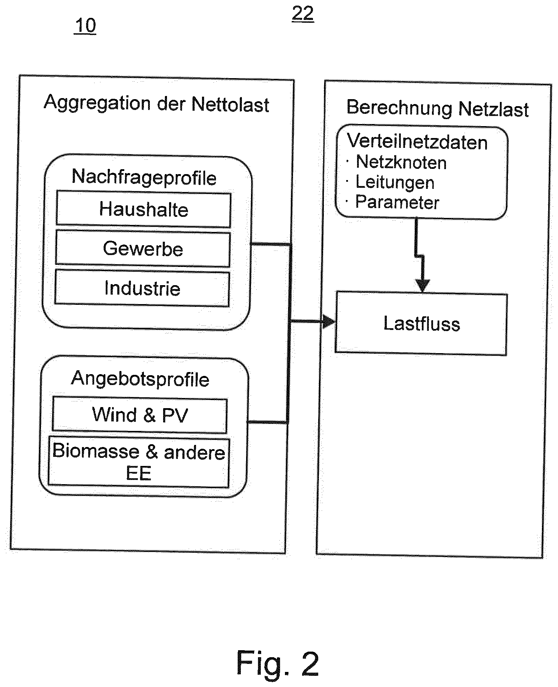

**Fig. 2** zeigt eine derartige schematische graphische Darstellung eines in der Verarbeitungs- oder Recheneinrichtung 22 implementierten Lastflussmodells des Stromnetzes 12.

Diesbezüglich sind ein Stromnetzmodell, ein Lastmodell sowie ein Stromerzeugungsmodell (beispielsweise Wind- und Solarerzeugung) als Eingabeparameter für das Lastflussmodell vorgesehen.

Das Stromnetzmodell bildet beispielsweise ein typisches Verteilnetzgebiet ab, das häufig von Einspeisemanagement-Maßnahmen betroffen ist.

Besonders wichtig ist die Kenntnis der Topologie des Verteilnetzgebietes sowie den darin umfassten technischen Systemen wie Umspannwerke und Leitungen.

Ein derartiges Verteilnetzgebiet ist beispielsweise das Verteilnetz eines regionalen Energieversorgers in Norddeutschland, das aufgrund der Anbindung zu diversen erneuerbaren Stromerzeugungsanlagen in Form von z.B. OnShore-Windparks von Einspeisemanagement-Maßnahmen am häufigsten in Deutschland betroffen ist.

Dieses Szenario ist allerdings exemplarisch zu verstehen und kann auch auf andere Regionen, Länder, Subkontinente bzw. Kontinente übertragen werden.

Das Lastmodell bildet den Stromverbrauch der mit dem Stromnetz, wie z.B. das zuvor genannte Verteilnetz, verbundenen elektrischen Lasten (z.B. Industrie oder Haushalte) ab.

Ausgehend von Standardlastprofilen auf Gemeindekreisebene kann eine Regionalisierung auf das gesamte Stromnetz durch eine Netzinfrastruktur nach Voronoi (vgl. "Joswig, M., Theobald, T., "Algorithmische Geometrie - Polyedrische und algebraische Methoden", Springer, ISBN 978-3-8348-9440-3, 2008.") nach geringster Entfernung vorgenommen werden.

Auf der Grundlage des Lastmodells für Industrie-, Gewerbe- und Haushaltslast sind so mittels der Verarbeitungs- oder Recheneinrichtung 22 Stromverbrauchszeitreihen bestimmbar.

Für die möglichst exakte Bereitstellung von Prognoseinformationen sind neben der Bestimmung der Stromverbrauchszeitreihen zudem die Bestimmung von Stromerzeugungszeitreihen notwendig.

Die Stromerzeugungszeitreihen für Solar-Erzeugungsanlagen und/oder Windenergieanlagen sind demnach auf der Grundlage des Stromerzeugungsmodells in Form von Stromerzeugungsvorhersagen für die Stromerzeugungsanlagen 14 basierend auf verschiedenen numerischen Wetterprognosen, die jeweils optimiert und miteinander kombiniert werden können, sowie für weitere grundlastfähige Stromerzeugungsanlagen mittels der Verarbeitungs- oder Recheneinrichtung 22 bestimmbar.

Grundlastfähige Stromerzeugungsanlagen sind beispielsweise Biogas- oder Biomasseanlagen bzw. Wasser-, Kohle- oder Kernkraftwerke.

Zusätzlich zu dem Verständnis darüber, wo und wann welche zukünftige Strombeaufschlagung bzw. -belastung des Stromnetzes auftreten wird, ist für die Bereitstellung der Prognoseinformationen das Wissen nötig, welche und wie viele Stromerzeugungsanlagen über welchen Zeitraum im Rahmen des Einspeisemanagements des Stromnetzes herabgeregelt oder abgeschaltet werden.

Daher sind die Prognoseinformationen mittels des in der Verarbeitungs- oder Recheneinrichtung 22 implementierten Lastflussmodells auf der Grundlage derjenigen einen oder mehreren Stromerzeugungsanlagen 14 bestimmbar, die einen maximalen knotenscharfen Einfluss auf einen Engpass des Stromnetzes 12 aufweisen. Die Auswahl derjenigen Stromerzeugungsanlagen, welche einen maximalen knotenscharfen Einfluss auf einen Engpass des Stromnetzes aufweisen, wird mit einem Engpassmanagement-Algorithmus getroffen.

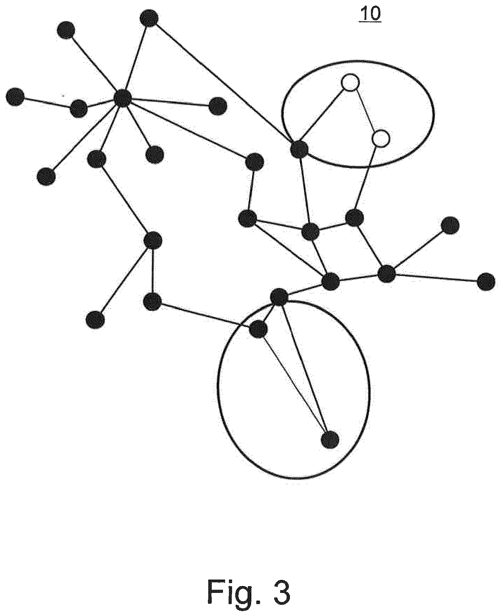

**Fig. 3** zeigt diesbezüglich eine schematische Darstellung zweier mittels der Verarbeitungs- oder Recheneinrichtung 22 und des Lastflussmodells bestimmten Engpässe des Stromnetzes 12.

Die Stromerzeugungsanlagen 14 mit dem maximalen knotenscharfen Einfluss sind so von der Verarbeitungs- oder Recheneinrichtung 22 bestimmbar und können beispielsweise in einem graphisch implementierten Netzmodell als Prognoseinformationen visualisiert werden.

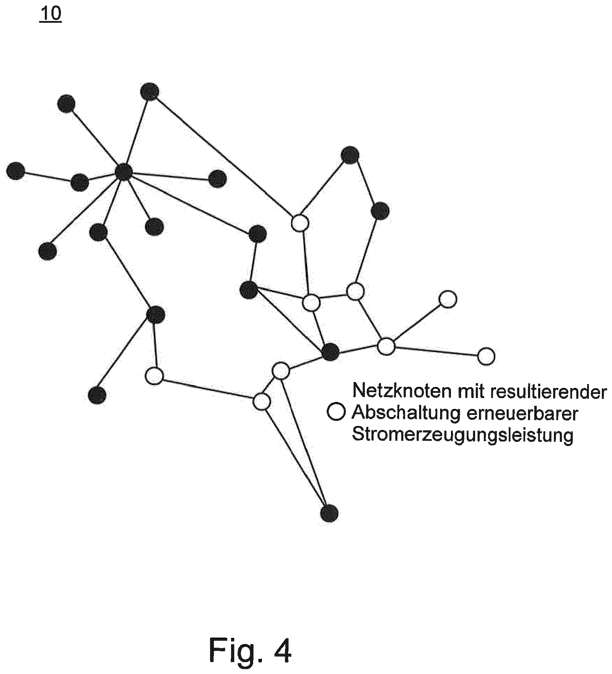

**Fig. 4** zeigt diesbezüglich eine schematische Darstellung derjenigen Stromerzeugungsanlagen 14 mit einem maximalen knotenscharfen Einfluss auf die beiden in Fig. 3 dargestellten Netzengpässe.

Weitere graphische Darstellungen, z.B. eine Zeitreihe in Form von zwei- oder dreidimensionalen Schaubildern der prognostizierten Abschaltung oder Herabregelung der Stromerzeugungsanlagen z.B. innerhalb eines Verteilnetzes sind ebenfalls denkbar.

Geographisch detailliertere Informationen über die prognostizierte Abschaltung oder Herabregelung der Stromerzeugungsanlagen 14 können durch das System 10 ebenfalls bereitgestellt werden.

So sind mittels der Verarbeitungs- oder Recheneinrichtung 22 die Prognoseinformationen für jede beliebige Stromerzeugungsanlage 14 in Folge des Einspeisemanagements bereitstellbar.

Zusätzlich sind die Prognoseinformationen mittels eines in der Verarbeitungs- oder Recheneinrichtung 22 implementierten Zuordnungsalgorithmus für Regionen, wie Regelzonen, Netzknoten bzw. Bilanzkreise oder für ein individuell vorgegebenes Portfolio an potentiell betroffenen Stromerzeugungsanlagen 14 miteinander verknüpfbar.

Da der Großteil der Einspeisemanagement-Maßnahmen im zuvor beispielhaft beschriebenen Verteilnetz stattfinden, ist durch den Zuordnungsalgorithmus ausgehend von der Prognoseinformationen für dieses Verteilnetz bestimmbar, welche zukünftigen Einspeisemanagement-Maßnahmen z.B. in Deutschland bzw. im subkontinentalen, kontinentalen oder weltweiten Maßstab zu erwarten sind.

### Bezugszeichenliste

- 10: System
- 12: Stromnetz
- 14: Stromerzeugungsanlagen
- 16: Empfangseinrichtung
- 18: elektronische Datenbank
- 20: Netzwerk
- 22: Verarbeitungs- oder Recheneinrichtung
- 24: Marktstammdatenregister

## Patentansprüche

1. System (10) zum Bereitstellen von Informationen bezüglich einer Leistungsregelung wenigstens eines Stromnetzes (12), wobei das Stromnetz (12) wenigstens ein Übertragungsnetz (12) und/oder wenigstens ein Verteilnetz (12) aufweist und wobei das Stromnetz (12) mit mehreren regenerativen oder erneuerbaren Stromerzeugungsanlagen (14) wirkverbunden ist, wobei das System (10) wenigstens eine Empfangseinrichtung (16) zum Empfangen von Daten von wenigstens einer elektronischen Datenbank (18) aufweist, die über ein Netzwerk (20) mit der Empfangseinrichtung (16) verbunden ist, wobei die Daten einer Abschaltung und/oder Herabregelung der Stromerzeugungsanlagen (14) in Folge eines Einspeisemanagements des Stromnetzes zugeordnet sind, wobei das System (10) ferner eine Verarbeitungs- und/oder Recheneinrichtung (22) zum Verarbeiten dieser Daten aufweist, sodass diese als Informationen verknüpfbar und/oder bereitstellbar sind, wobei
die Informationen Echtzeit-Informationen sind und die Daten Echtzeitdaten sind, und wobei verschiedene Datenformate der Echtzeit-Daten von den jeweiligen elektronischen Datenbanken (18) mittels der Verarbeitungs- und/oder Recheneinrichtung (22) in ein einheitliches Datenformat umwandelbar sind und die Güte der Echtzeit-Daten der verschiedenen elektronischen Datenbanken (18) durch Algorithmen, welche Plausibilitätschecks durchführen, erhöht werden kann, wobei
die Verarbeitungs- und/oder Recheneinrichtung (22) zum Verarbeiten von modellbasierten Daten eingerichtet ist, sodass diese als Prognose-Informationen verknüpfbar und/oder bereitstellbar sind, und wobei die Prognose-Informationen einer zeitlich zukünftigen Abschaltung und/oder Herabregelung der Stromerzeugungsanlagen (14) in Folge des Einspeisemanagements des Stromnetzes (12) zugeordnet sind, wobei
Stromverbrauchszeitreihen auf der Grundlage eines Lastmodells für Industrie-, Gewerbe- und Haushaltslast mittels der Verarbeitungs- und/oder Recheneinrichtung (22) bestimmbar sind, und wobei Stromerzeugungszeitreihen auf der Grundlage eines Stromerzeugungsmodells in Form von Stromerzeugungsvorhersagen Erneuerbarer Energien für die Stromerzeugungsanlagen (14) basierend auf numerischen Wetterprognosen sowie für weitere grundlastfähige Stromerzeugungsanlagen mittels der Verarbeitungs- und/oder Recheneinrichtung (22) bestimmbar sind, wobei die Prognose-Informationen mittels der Verarbeitungs- und/oder Recheneinrichtung (22) sowie mittels eines darin implementierten Lastflussmodells des Stromnetzes (12) zur Berechnung dessen zeitlich zukünftiger Strombeaufschlagung bestimmbar sind, wobei ein Stromnetzmodell, ein Lastmodell sowie ein Stromerzeugungsmodell als Eingabeparameter für das Lastflussmodell vorgesehen sind, wobei
die Prognose-Informationen mittels des in der Verarbeitungs- und/oder Recheneinrichtung (22) implementierten Lastflussmodells auf der Grundlage derjenigen einen oder mehreren Stromerzeugungsanlagen (14) bestimmbar sind, die einen maximalen knotenscharfen Einfluss auf einen Engpass des Stromnetzes (12) aufweisen und wobei
die Echtzeit-Daten einer oder mehrerer spezifischer Stromerzeugungsanlagen (14) mit Erzeugungszeitreihen dieser zugehörigen einen oder den mehreren Stromerzeugungsanlagen (14) auf Basis von verschiedenen numerischen Wetterprognose-Modellen mittels der Verarbeitungs- und/oder Recheneinrichtung (22) verknüpfbar sind.

2. System (10) nach Anspruch 1, **dadurch gekennzeichnet, dass** die Empfangseinrichtung (16) über das Netzwerk (20) mit mehreren, insbesondere dezentralen und öffentlich zugänglichen, elektronischen Datenbanken (18) jeweiliger Betreiber des Stromnetzes (12) und/oder der Stromerzeugungsanlagen (14) verbunden ist.

3. System (10) nach einem der vorhergehenden Ansprüche, **dadurch gekennzeichnet, dass** die Echtzeit-Daten einer zeitaktuellen Abschaltung und/oder Herabregelung der Stromerzeugungsanlagen (14) in Folge des Einspeisemanagements des Stromnetzes (12) zugeordnet sind.

4. System (10) nach einem der vorhergehenden Ansprüche, **dadurch gekennzeichnet, dass** mittels der Verarbeitungs- und/oder Recheneinrichtung (22) die Echtzeit-Daten spezifischer Stromerzeugungsanlagen (14) sowie deren spezifische zeitaktuelle Stromerzeugung mit weiteren Daten aus einem Marktstammdatenregister (24) verknüpfbar sind.

5. System (10) nach einem der vorhergehenden Ansprüche, **dadurch gekennzeichnet, dass** mittels der Verarbeitungs- und/oder Recheneinrichtung (22) die Echtzeit-Daten für jede beliebige Stromerzeugungsanlage (14) in Folge des Einspeisemanagements bereitstellbar sind und mittels eines in der Verarbeitungs- und/oder Recheneinrichtung (22) implementierten Zuordnungsalgorithmus für Regionen, wie Regelzonen, Netzknoten bzw. Bilanzkreise oder für ein individuell vorgegebenes Portfolio an potentiell betroffenen Stromerzeugungsanlagen (14) miteinander verknüpfbar sind.

6. System (10) nach Anspruch 1, **dadurch gekennzeichnet, dass** mittels der Verarbeitungs- und/oder Recheneinrichtung (22) die Prognose-Informationen für jede beliebige Stromerzeugungsanlage (14) und beliebige Vorhersagehorizonte in Folge des Einspeisemanagements bereitstellbar sind und mittels eines in der Verarbeitungs- und/oder Recheneinrichtung (22) implementierten Zuordnungsalgorithmus für Regionen, wie Regelzonen, Netzknoten bzw. Bilanzkreise oder für ein individuell vorgegebenes Portfolio an potentiell betroffenen Stromerzeugungsanlagen (14) miteinander verknüpfbar sind.

## Claims

1. A system (10) for providing information regarding a power control of at least one electric power grid (12), wherein the electric power grid (12) comprises at least one transmission network (12) and/or at least one distribution network (12) and wherein the electric power grid (12) is operatively connected to a plurality of regenerative or renewable electric power generation facilities (14), wherein the system (10) comprises at least one reception device (16) for receiving data from at least one electronic database (18) which is connected to the reception device (16) via a network (20), said data being associated with a shutdown and/or down regulation of the electric power generation facilities (14) as a result of a feed-in management of the electric power grid, wherein the system (10) further comprises a processing and/or computing equipment (22) for processing said data so that it can be linked and/or made available as information, wherein
the information is real-time information and the data is real-time data, and wherein different data formats of the real-time data from the respective electronic databases (18) are convertible into a uniform data format by means of the processing and/or computing equipment (22) and the quality of the real-time data of the various electronic databases (18) can be increased by algorithms performing plausibility checks, wherein
the processing and/or computing equipment (22) is arranged for processing model-based data so that the latter can be linked and/or made available as forecast information, and wherein the forecast information is associated with a temporally future shutdown and/or down regulation of the electric power generation facilities (14) as a result of the feed-in management of the electric power grid (12), wherein
electric power consumption time series can be determined on the basis of a load model for industrial, commercial and household loads by means of the processing and/or computing equipment (22), and wherein electric power generation time series can be determined on the basis of an electric power generation model in the form of electric power generation forecasts of renewable energies for the electric power generation facilities (14) based on numerical weather forecasts as well as for further base-load type electric power generation facilities by means of the processing and/or computing equipment (22), wherein
the forecast information can be determined by means of the processing and/or computing equipment (22) as well as by means of a load flow model, implemented therein, of the electric power grid (12) for calculating its temporally future electric power loading, wherein an electric power grid model, a load model and an electric power generation model are provided as input parameters for the load flow model, wherein
the forecast information can be determined by means of the load flow model implemented in the processing and/or computing means (22) on the basis of those one or more electric power generation facilities (14) which have a maximum node-specific influence on a bottleneck of the electric power grid (12), and wherein
the real-time data of one or more specific electric power generation facilities (14) can be linked with generation time series of said associated one or more electric power generation facilities (14) based on various numerical weather forecast models by means of the processing and/or computing equipment (22).

2. The system (10) according to claim 1, **characterized in that** the reception device (16) is connected via the network (20) to several, in particular decentralized and publicly accessible, electronic databases (18) of respective operators of the electric power grid (12) and/or the electric power generation facilities (14).

3. The system (10) according to any of the preceding claims, **characterized in that** the real-time data are associated with a time-current shutdown and/or down regulation of the electric power generation facilities (14) as a result of the feed-in management of the electric power grid (12).

4. The system (10) according to any of the preceding claims, **characterized in that** by means of the processing and/or computing equipment (22) the real-time data of specific electric power generation facilities (14) as well as their specific time-current electric power generation can be linked with further data from a market master data register (24).

5. The system (10) according to any of the preceding claims, **characterized in that** by means of the processing and/or computing equipment (22) the real-time data can be made available for any electric power generation facility (14) as a result of the feed-in management and can be linked with one another by means of an allocation algorithm implemented in the processing and/or computing equipment (22) for regions such as control zones, network nodes or balancing groups or for an individually predefined portfolio of potentially affected electric power generation facilities (14).

6. The system (10) according to claim 1, **characterized in that** by means of the processing and/or computing equipment (22) the forecast information can be made available for any electric power generation facility (14) and any forecast horizons as a result of the feed-in management and can be linked with one another by means of an allocation algorithm implemented in the processing and/or computing equipment (22) for regions such as control zones, network nodes or balancing groups or for an individually predefined portfolio of potentially affected electric power generation facilities (14).

## Revendications

1. Système (10) de génération d'informations par rapport à un réglage de puissance d'au moins un réseau de courant (12), le réseau de courant (12) comportant au moins un réseau de transmission (12) et/ou au moins un réseau de distribution (12) et le réseau de courant (12) étant relié à plusieurs installations de production de courant régénératives ou renouvelables (14), le système (10) comportant au moins un dispositif récepteur (16) pour recevoir des données d'au moins une base de données électroniques (18) reliée au dispositif récepteur (16) via un réseau (20), les données d'une déconnexion et/ou un réglage de diminution étant associées à des installations de production de courant (14) à la suite d'une gestion d'alimentation du réseau de courant, le système (10) comportant en outre un dispositif de traitement et/ou de calcul (22) pour traiter ces données de sorte que celles-ci puissent être associées ou mises à disposition sous la forme d'informations ;
les informations étant des informations en temps réel et les données étant des données en temps réel et différents formats de données des données en temps réel provenant des banques de données électroniques (18) respectives à l'aide du dispositif de traitement et/ou de calcul (22) étant converties en un format de données uniforme et la qualité des données en temps réel des différentes banques de données électroniques (18) pouvant être augmentée par le biais d'algorithmes réalisant des contrôle de plausibilité, ;
le dispositif de traitement et/ou de calcul (22) étant conçu pour traiter des données basées sur modèle de façon à ce que celles-ci puissent être associées et/ou mises à disposition sous forme d'informations de pronostic et les informations de pronostic étant associés à une déconnexion et/ou à un réglage de diminution futurs à venir des installations de production de courant (14) à la suite de la gestion d'alimentation du réseau de courant (12) ;
des séries chronologiques de consommation de courant basées sur un modèle de charge pour la charge de l'industrie, des entreprises et des ménages peuvent être déterminées à l'aide du dispositif de traitement et/ou de calcul (22) et les séries chronologiques de consommation de courant pouvant être déterminées sur la base d'un modèle de production de courant sous la forme de prévisions de production de courant d'énergies pour les installations de production de courant (14) sur la base de pronostics météorologiques numériques ainsi que pour d'autres installations de production de courant capables d'une charge de base à l'aide du dispositif de traitement et/ou de calcul (22), les informations de pronostic pouvant être déterminées à l'aide du dispositif de traitement et/ou de calcul (22) ainsi qu'à l'aide d'un modèle de flux de charge du réseau de courant (12) implémenté à l'intérieur en vue de calculer son alimentation en courant, un modèle de réseau de courant, un modèle de charge ainsi qu'un modèle de production de courant étant prévus comme paramètres d'entrée pour le modèle de flux de charge, les informations de pronostic pouvant être déterminées à l'aide du modèle de flux de charge implémenté dans le dispositif de traitement et/ou de calcul (22) sur la base de sa ou de ses installations de production de courant (14) comportant un flux entrant maximal fortement restrictif limité à un goulet d'étranglement du réseau de courant (12) ; et
les données en temps réel d'une ou de ou plusieurs installations de production de courant (14) sont associés à des séries chronologiques de production spécifiques de cette ou de ces installations de production de courant (14) sur la base des différents modèles de pronostics météorologiques numériques à l'aide du dispositif de traitement et/ou de calcul (22).

2. Système (10) selon la revendication 1, **caractérisé en ce que** le dispositif récepteur (16) est relié à plusieurs banques de données électroniques (18) et/ou opérateurs respectifs accessibles, notamment de façon décentralisée et publique, du réseau de courant (12) et/ou des installations de production de courant (14) via le réseau (20).

3. Système (10) selon l'une quelconque des revendications précédentes, **caractérisé en ce que** les données en temps réel sont associées à une déconnexion et/ou un réglage de diminution actuel des installations de production de courant (14) à la suite de la gestion d'alimentation du réseau de courant (12).

4. Système (10) selon l'une quelconque des revendications précédentes, **caractérisé en ce que** les données en temps réel des installations de production de courant (14) spécifiques ainsi que leur production de courant actuelle spécifique sont associées à d'autres données provenant d'un registre de données de provenance de marché (24) à l'aide du dispositif de traitement et/ou de calcul (22).

5. Système (10) selon l'une quelconque des revendications précédentes, **caractérisé en ce que** les données en temps réel pour chaque installation de production de courant (14) quelconque sont mises à disposition à la suite de la gestion d'alimentation à l'aide du dispositif de traitement et/ou de calcul (22) et peuvent être associées entre elles à l'aide d'un algorithme d'association implémenté dans le dispositif de traitement et/ou de calcul (22) pour des régions par exemple des zones de réglage, des nœuds du réseau et/ou des périmètres d'équilibre ou pour un ensemble individuellement prédéfini d'installations de production de courant (14) potentiellement concernées.

6. Système (10) selon la revendication 1, **caractérisé en ce que** les informations de pronostic pour chaque installation de production de courant (14) quelconque et chaque horizon de prévision quelconque peuvent être mis à disposition à l'aide du dispositif de traitement et/ou de calcul (22) à la suite de la gestion d'alimentation et être associés entre eux à l'aide d'un algorithme d'association implémenté dans le dispositif de traitement et/ou de calcul (22) pour des régions, par exemple des zones de réglage, des nœuds de réseau et/ou des périmètres d'équilibre ou pour un ensemble individuellement prédéfini d'installations de production de courant (14) potentiellement concernées.
